# EUROPÄISCHE PATENTSCHRIFT

(11) **EP 2 652 566 B1**
(45) Veröffentlichungstag und Bekanntmachung des Hinweises auf die Patenterteilung: **06.11.2019**
(21) Anmeldenummer: 11817461.4
(22) Anmeldetag: 19.12.2011
(51) Int. Cl.: G05B 19/19, G05B 19/18, B21D 55/00, B30B 15/26, B21D 5/00

(54) **STEUERVORRICHTUNG FÜR EINE WERKZEUGMASCHINE UND VERFAHREN ZUM STEUERN DER WERKZEUGMASCHINE**
CONTROL DEVICE FOR A MACHINE TOOL AND METHOD FOR CONTROLLING THE MACHINE TOOL
DISPOSITIF DE COMMANDE D'UNE MACHINE-OUTIL ET PROCÉDÉ DE COMMANDE DE LADITE MACHINE-OUTIL

(30) Priorität: 17.12.2010 AT 20892010
(43) Veröffentlichungstag der Anmeldung: 23.10.2013
(73) Patentinhaber: TRUMPF Maschinen Austria GmbH & Co. KG., 4061 Pasching (AT)
(72) Erfinder: ANGERER, Gerhard, A-4203 Altenberg (AT); HÖRL, Matthias, A-4020 Linz (AT); STRASSER, Hagen, A-4061 Pasching (AT); THEIS, Helmut, A-4540 Pfarrkirchen (AT); WEISS, Thomas, A-4020 Linz (AT); FREUDENTHALER, Klemens, 4020 Linz (AT); GAGGL, Josef, 4400 Steyr (AT)
(74) Vertreter: Burger, Hannes
(86) Internationale Anmeldenummer: PCT/AT2011/050047
(87) Internationale Veröffentlichungsnummer: WO 2012/079108

(56) Entgegenhaltungen:
- EP-A2- 0 525 539
- WO-A1-2007/051628
- WO-A1-2007/062441
- US-A1- 2010 250 089

## Beschreibung

Die Erfindung betrifft eine Maschinensteuerung, umfassend ein Sensormodul, ein Auswertemodul und ein Steuerungsmodul.

Bei einer Maschinensteuerung, insbesondere bei einer Maschinensteuerung für eine Biege- bzw. Abkantpresse, liegt eine Anforderung darin, eine zuverlässige Bedienung der Biege- bzw. Abkantfunktion zu gewährleisten, insbesondere auch dann, wenn vom Bediener Manipulationsarbeiten erforderlich sind. Gerade beim Fertigen kleiner Teile bzw. von Teilen mit komplexen Biegelinien ist es zumeist erforderlich, dass der Bediener das Werkteil bis zum Beginn des Biegevorgangs relativ zum Biegegesenk entsprechend ausrichtet und den Biegevorgang durch Betätigen eines Auslöseelements startet. Aus dem Stand der Technik sind Vorrichtungen bekannt um sicherzustellen, dass sich beim Biegevorgang keine Körperteile zwischen dem Pressenbalken und dem Anschlagbalken des Biegegesenks befinden, wodurch eine Verletzungsgefahr des Bedieners verhindert wird. Zur Auslösung des Biegevorgangs weisen bekannte Maschinensteuerungen ein Bedienelement in Form eines Fußtasters auf, welcher Fußschalter von einem Steuerungsmodul der Maschinensteuerung ausgewertet wird und daraufhin das Antriebsmittel der Werkzeugmaschine zu aktivieren, um den Biegevorgang durchzuführen, bzw. zu deaktivieren, um den Biegevorgang zu beenden und das Biegegesenk anzuhalten bzw. wieder in die Ausgangsposition zurück zu bewegen.

Aus der JP 2007-069261 A ist ein Betätigungselement bekannt, bei dem das Schaltelement in einem Schuh angeordnet ist, wodurch der Bediener sich im Bereich der Werkzeugmaschine im Wesentlichen frei bewegen kann und jederzeit den Biegevorgang auslösen kann, ohne dazu den bisher bekannten Betätigungsschalter an den gewünschten Einsatzort verrücken zu müssen, wobei ferner der Schaltzustand des Betätigungselements drahtlos vom Schuh an ein Steuerungsmodul übermittelt wird. Basierend auf dem Schaltzustand des Sensors im Schuh des Bedieners, wird die Verfahrbewegung des Pressenbalkens entsprechend gesteuert.

Aus der EP 0 525 539 A2 ist ein Verfahren zur Steuerung einer zahnärztlichen Behandlungseinrichtung bekannt, bei der Steuersignale von einem Fußkontakt an eine zentrale Steuerein heit übertragen werden. Dabei wird eine Druckbelastung einer Oberfläche des Fußkontaktes in primäre elektrische Signale umgewandelt, diese primären Signale werden dann in Steuersignale für die zentrale Steuereinheit umgesetzt. Es ist vorgesehen, dass Druckbelastungen über Drucksensoren, Potentiometersensoren und XYZ-Sensorpads in primäre Signale umgesetzt werden. Durch eine individuelle Auslegung des Fußkontaktes und ferner durch Programmierung durch Funktionsfelder für Druckbelastungen, kann eine beliebige Auslegung des Fußkontaktes erreicht werden. In einer Ausführungsvariante ist ferner vorgesehen, dass der Fußkontakt selbstfahrend ist und somit beispielsweise zu Beginn einer Behandlung eine vorbestimmte, von der Bedienperson günstig zu erreichende Position, einnehmen kann. Dazu kann beispielsweise in der Schuhsohle der Bedienperson ein detektierbares Material vorgesehen sein. Der Fußkontakt detektiert Druckbelastungen durch den Drucksensor, wobei im Controller ein Steuersignal generiert wird, welches von verschiedenen Kriterien, wie beispielsweise Stärke der Druckbelastung, Dauer der Belastung und einer beliebigen funktionellen Abhängigkeit abhängen kann. Der Fußkontakt kann ferner je nach Größe und Auslegung von mehreren Personen gleichzeitig oder wahlweise bedient werden, wobei eine Anordnung des Fußkontaktes unter dem Patientenstuhl sinnvoll ist.

Bei der Maschinenbedienung kann es nun jedoch erforderlich sein, neben eines reinen Ein-Aus-Betriebs bzw. einer Biege- und Rückzugsbewegung des Pressenbalkens, weitere Steuerungskommandos an das Steuerungsmodul zu übertragen, ohne dass dafür der Bediener die Aufmerksamkeit vom Arbeitsbereich abwenden muss, wodurch sich die Gefahr einer Fehlbedienung bzw. einer Verletzung erhöhen würde. Beim Arbeiten mit Werkzeugmaschinen kann es insbesondere auch vorkommen, dass eine Notsituation gegeben ist und ein unmittelbarer Stopp der Verfahrbewegung des Pressenbalkens bzw. eine sofortige Rückbewegung erforderlich ist. Dazu weisen bekannte Werkzeugmaschinen zumeist eines oder mehrere Notfallbetätigungselemente auf im Bereich der Werkzeugmaschine angeordnet sind. Diese Ausbildung hat jedoch den Nachteil, dass ein derartiges Sicherheitsschaltelement zusätzlichen schaltungstechnischen und gerätschaftlichen Aufwand mit sich zieht, da die zur Ausbildung erforderlichen schaltungstechnischen Komponenten die flexible Einsetzbarkeit der Maschinensteuerung einschränken.

Auch offenbart der Stand der Technik nicht, dass neben einer reinen Start-Stopp-Information, zusätzliche variable Steuerungsinformation vom Bediener an die Maschinensteuerung übermittelt werden können.

Die Aufgabe der Erfindung liegt also darin eine Maschinensteuerung zu schaffen, bei der ein Bediener Bedienfunktionen auslösen kann, ohne dafür die Bewegungsfreiheit im Bereich der Werkzeugmaschine einzuschränken.

Die Aufgabe der Erfindung wird durch den Gegenstand der Ansprüche 1 und 13 gelöst.

Das Auswertemodul weist einen Schwellwertgeber auf, wobei das Auswertemodul durch eine Potential- und/oder eine Änderungsanalyse aus dem erfassten elektrischen Signal ein Signalprofil bildet, wobei das Auswertemodul ferner ein Speichermittel aufweist, in welchem ein Referenz-Signalprofil hinterlegt ist. Das Auswertemodul weist ferner ein Vergleichsmodul auf, welches das erfasste Signalprofil mit dem hinterlegten Signalprofil vergleicht und das Steuerungssignal generiert. Zumindest eine Signalverbindung zwischen Steuerungsmodul und Auswertemodul bzw. zwischen Auswertemodul und Sensormodul ist drahtlos ausgebildet ist. Der besondere Vorteil der erfindungsgemäßen Ausbildung liegt nun darin, dass aufgrund des Schwellwertgebers des Auswertemoduls neben einer bekannten Zustandsbedienung mit zwei Schaltzuständen eine Vielzahl weiterer Bedienmöglichkeiten gegeben ist. Da vom Wandler des Sensormoduls eine elektrische Kenngröße generiert wird, welche der auf den Sensor einwirkenden physikalischen Größe proportional ist, lassen sich eine Mehrzahl von Schwellwerten ableiten, welche abhängig von der Intensität der einwirkenden Größe sind. Bei einer Potentialanalyse durch den Schwellwertgeber der erfassten, elektrischen Kenngröße, lassen sich eine Mehrzahl unterschiedlicher Intensitätsstufen, welche auf das Sensormodul einwirken, auswerten. Bei Durchführung einer Änderungsanalyse durch den Schwellwertgeber wird zusätzlich oder alternativ zum erfassten absoluten Wert der einwirkenden physikalischen Größe auch noch die Geschwindigkeit des Anstiegs bzw. Abfalls der Einwirkung ermittelt, sodass daraus bspw. ein Steuerungssignal für die Verfahrgeschwindigkeit des Pressenbalkens ableiten lässt. In einer möglichen Weiterbildung können im Speichermittel mehrere Signalprofile hinterlegt sein, so dass mehrere Steuersignale generiert werden können.

Von Vorteil ist eine Weiterbildung, nach der das Sensormodul in einem Bekleidungsstück, insbesondere einem Schuh, angeordnet ist. Im Bereich von Werkzeugmaschinen ist es zumeist eine sicherheitstechnische Anforderung, dass Bediener mit einem entsprechenden Schuhwerk ausgestattet sind, um die Verletzungsgefahr zu verringern. Derartiges Schuhwerk bietet zumeist den Raum für die Anordnung von Komponenten der erfindungsgemäßen Maschinensteuerung, insbesondere können das Sensormodul bzw. das Sensor- und das Auswertemodul im Bekleidungsstück angeordnet sein. Da auch im Gefahrenfall zumeist sichergestellt ist, dass der Bediener mit den Schuhen Bodenkontakt hat und somit auch in Notsituationen eine zuverlässige Bewegung dahingehend möglich ist, dass aufgrund der vom Auswertemodul durchgeführten Signalanalyse ein Steuerungssignal eindeutig abgeleitet werden kann. Durch die erfindungsgemäße Ausbildung ist es dem Bediener insbesondere möglich eine Bedienhandlung zu setzten, ohne seine Aufmerksamkeit vom zu bearbeitenden Werkteil bzw. der Werkzeugmaschine abzuwenden. Mit der erfindungsgemäßen Weiterbildung bleibt so stets die volle Aufmerksamkeit des Bedieners am Werkteil bzw. an der Werkzeugmaschine. Es ist sowohl eine in den Schuh integrierte Anordnung möglich, bei der das Sensormodul bspw. im Sohlenmaterial eingebettet angeordnet ist und somit von diesem Material gegen eine übermäßige mechanische Beanspruchung geschützt ist. Es ist aber auch möglich, dass das Sensormodul als Einlegesohle ausgebildet ist und somit in jeden Schuh eingelegt werden kann, ohne dass dafür ein spezieller Schuhaufbau erforderlich wäre. Jedenfalls ist die Anordnung derart ausgebildet, dass es zu keiner Bewegungseinschränkung des Bedieners kommt.

Zur Erweiterung der Anwendungsmöglichkeiten ist eine Weiterbildung von Vorteil, nach der das Sensormodul als Überziehteil ausgebildet ist und an einem Bekleidungsstück angeordnet ist. Beispielsweise kann das Sensormodul als Überziehschuh, oder auch als Handschuh ausgebildet sein und somit jederzeit zusätzlich zu einer bestehenden Arbeitsausrüstung getragen werden. Ein Überziehschuh kann einen Betätigungsteil aufweisen, der mittels einer längsveränderlichen Klemmvorrichtung am Außenschuh des Bedieners angeordnet wird.

Nach einer Weiterbildung ist nun vorgesehen, dass das Sensor- und das Auswertemodul integriert angeordnet sind, wobei die Signalverbindung zwischen den integriert angeordneten Modulen und dem Steuerungsmodul drahtlos ausgebildet ist. Diese Ausbildung hat den Vorteil, dass somit eine Mehrzahl von Werkzeugmaschinen mitbedient werden können, da an das Steuerungsmodul das bereits generierte Steuerungssignal drahtlos übermittelt wird. Somit kann ein Bediener mit einer beispielsweise generisch ausgebildeten Anordnung des Sensor- und Auswertemoduls mehrere Werkzeugmaschinen bedienen, ohne dass dafür jeweils eine individuell ausgebildete Maschinensteuerung erforderlich wäre.

Eine Weiterbildung besteht auch darin, dass die Anordnung des Sensor- und des Auswertemoduls als Einsteckmodul ausgebildet ist was den Vorteil hat, dass dieses Modul in einer vorgesehenen Ausnehmung bspw. eines Schuhs angeordnet werden kann. Insbesondere ist es von Vorteil, wenn im Schuh eine Universalausnehmung vorhanden ist, die bei der Herstellung des Schuhs mit einem Verschlussteil verschlossen wird, wodurch der Schuh voll funktional ist und wobei bei Bedarf das Verschlussteil durch die Modulanordnung ersetzt wird.

Da im Umfeld von Werkzeugmaschinen zumeist ein recht hoher Lärmpegel herrscht, ist es von Vorteil, wenn mit dem Auswertemodul ein Aktuator verbunden ist. Somit kann das Auswertemodul nach Erkennung eines gültigen Signalprofils bzw. das Steuerungsmodul nach Empfang eines gültigen Steuerungskommandos, dem Bediener eine taktile Wahrnehmung, insbesondere eine mechano-taktile-Wahrnehmung vermittelt werden. Der Aktuator kann bspw. durch einen Vibrationsmotor gebildet sein, der im Bekleidungsstück angeordnet ist und seine Schwingungen auf den Körperteil überträgt, so dass der Bediener seine Konzentration nicht vom Werkteil abwenden muss und trotzdem die Rückmeldung über eine positive Erkennung des Steuerungskommandos bzw. des Signalprofils erhält.

Von Vorteil ist ferner auch eine Weiterbildung, nach der das Auswerte- und das Steuerungsmodul integriert angeordnet sind, wobei die Signalverbindung zwischen dem Sensormodul und den integriert angeordneten Modulen drahtlos ausgebildet ist. Somit kann eine Maschinensteuerung geschaffen werden, bei der das Sensormodul möglichst einfach, kompakt und kostengünstig ausgebildet ist, die aufwendige Generierung des Signalprofils und der durchzuführende Vergleich kann durch die integrierte Anordnung des Auswerte- und des Steuerungsmoduls auf mehr Verarbeitungsressourcen zugreifen und damit auch entsprechend aufwendigere Analyseverfahren ausführen.

Nach einer Weiterbildung ist im Signalprofil zumindest eine Folge zeitdiskreter Signalwert-Änderungswerte hinterlegt, was den Vorteil hat, dass Schaltstufen ausgebildet, und im Gegensatz zum Stand der Technik somit mehr als zwei Schaltzustände gebildet werden können. Da erfindungsgemäß aus der auf das Sensormodul einwirkenden physikalischen Größe eine proportionale elektrische Kenngröße generiert wird, kann somit eine Folge von Einwirkungen detektiert und als Steuersignal ausgewertet werden, welche Folge aus einer Mehrzahl, in bestimmter zeitlicher Reihenfolge hintereinander folgenden Einwirkungen bestehen muss. Somit kann der Bediener durch mehrmaliges Einwirken auf das Sensormodul ein Steuersignal generieren, da das erfasste Signalprofil mit hinterlegten Referenzsignalprofilen verglichen wird. Insbesondere ist somit jedoch auch eine Fehlbedienung vermieden, da beispielsweise eine zufällige Kontaktgabe aufgrund der Bewegung des Bedieners nicht zu einer irrtümlichen Auslösung eines Steuersignals führen kann.

In eine ähnliche Richtung geht eine Weiterbildung, nach der im Signalprofil eine Zeitdauer des Über- bzw. Unterschreiten des Schwellwertes hinterlegt ist. Beispielsweise kann eine Kommandosequenz dadurch initiiert werden, dass der Bediener eine gewisse Zeitspanne eine physikalische Größe auf das Sensormodul einwirken lässt, woraufhin das Auswertemodul den Beginn eines Signalprofils erkennt und die folgenden, erfassten Signale mit den im Referenz-profil hinterlegten Signalverlauf vergleicht. Diese Weiterbildung hat insbesondere jedoch den Vorteil, dass dadurch eine fehlerhafte Generierung eines Steuerungssignals nicht möglich ist, da nur eine bewusste und damit zumeist länger andauernde Einwirkung für die Generierung des Signalprofils herangezogen wird. Zufällige Einwirkungen, die aufgrund der Bewegung des Bedieners entstehen, werden somit als nicht relevant ignoriert. Dahingehend ist es auch zu verstehen, dass auch eine Ruhepause ausgewertet werden kann, also dass vom Bediener eine gewisse Zeit keine Aktivität erfolgen darf.

Nach einer Weiterbildung ist der Wandler als Drucksensor ausgebildet, beispielsweise als drucksensitiver Widerstand oder als druckabhängige Kapazität, was beispielsweise den Vorteil hat, dass ein derartiger Sensor als frequenzbestimmendes Bauteil in einem elektrischen Schwingkreis dienen kann und somit eine Krafteinwirkung auf das Sensormodul eine direkte Auswirkung auf die Resonanzfrequenz des Schwingkreises hat, wodurch sich auch die Übertragungsparameter der drahtlosen Signalverbindung ändern werden, was von der Gegenstelle ausgewertet und als Steuerungssignal interpretiert werden kann.

Nach einer Weiterbildung ist der Wandler als Beschleunigungssensor ausgebildet ist was den Vorteil hat, dass dadurch mehr Freiheitsgrade in der Erfassung physikalischer Kenngrößen möglich sind. Bei einer Krafteinwirkung ist im Wesentlichen lediglich eine Erfassungsrichtung möglich bzw. kann nur Stärke und/oder die Zu- bzw. Abnahme der Krafteinwirkung erfasst werden. Bei einem Beschleunigungssensor können nun je nach Ausbildung des Beschleunigungssensors bspw. vor-zurück und/oder hoch-nieder Bewegungen erfasst werden. Bei einer Ausbildung als 3-Achsen Sensor können Bewegungen in allen drei Raumrichtungen erfasst werden um daraus ein entsprechend fein abgestuftes Signalprofil bilden zu können und daraus eine entsprechende Vielfalt an Steuerungssignalen generieren zu können. In einer Weiterbildung kann auch ein Inertialsensor vorgesehen sein, um somit neben translatorischen, auch rotatorische Beschleunigungen erfassen zu können.

Eine Ausbildung des Wandlers als Schwellwertsensor hat den Vorteil, dass somit ein Mehrpunktschalter bspw. mit einer federvorgespannten Wippe, mehrere explizite Schaltstufen aufweist, der Bediener daher eine geringere Aufmerksamkeit auf die Präzision der Kontaktgabe lenken muss. Von Vorteil ist ferner eine Weiterbildung, wenn ein derartiger Schwellwertsensor eine sensorische Rückmeldung an den Bediener liefert, sodass dieser die Erreichung der jeweiligen Schwellwertschaltstufen eindeutig erkennen kann.

Da vom Sensormodul bzw. gegebenenfalls vom Auswertemodul eine geringfügige Menge elektrischer Energie zur Durchführung der Analyse bzw. zur drahtlosen Übertragung erforderlich ist, ist es von Vorteil, wenn der Wandler als aktives Bauteil ausgebildet ist und somit durch die Krafteinwirkung bzw. durch eine Beschleunigung auch eine elektrische Spannung gebildet wird. Der Wandler kann beispielsweise als piezoelektrisches Element oder als elektromagnetischer Wandler ausgebildet sein, wobei dann die Spannung bzw. der Anstieg der abgegebenen Spannung als Maß für die einwirkende Kraft bzw. die Beschleunigung herangezogen werden kann.

Nach einer Weiterbildung ist die drahtlose Signalverbindung durch eine Nahbereichs-Kommunikationsverbindung gebildet ist, insbesondere als Hochfrequenz-Kommunikationsverbindung. Beispiele dafür sind Nahbereichs-Kommunikationsverbindungen wie Bluetooth, oder ZIGBEE. Es ist jedoch auch möglich, dass eine dem erkannten Signalprofil entsprechende Frequenz ausgesandt wird, welche auf der Gegenstelle aufgenommen und entsprechend in Steuerungskommandos umgesetzt wird. In einer Weiterbildung kann vorgesehen sein, dass eine Zweiwegkommunikationsverbindung vorhanden ist, sodass das Steuerungsmodul eindeutig die Präsenz eines Sensormoduls im Nahbereich der Werkzeugmaschine erkennen kann.

In Weiterbildungen ist ferner vorgesehen, dass das Steuerungsmodul ein Positionsortungs- bzw. Positionsbestimmungsmodul mit einer Empfangsgegenstelle aufweist und dass zwischen dem Auswertemodul und dem Steuerungsmodul eine drahtlose dritte Signalverbindung besteht, wobei diese dritte Signalverbindung bevorzugt auf Ultraschall basierend ausgebildet ist. Für ein über diese dritte Signalverbindung ausgesendetes Ultraschallsignal und ein zeitgleich über die zweite Signalverbindung ausgesandtes HF-Signal wird vom Positionsortungs- bzw. Positionsbestimmungsmodul, mittels der einen Empfangsgegenstelle, eine Laufzeitdifferenz ermittelt und daraus eine Positionsinformation ermittelt.

Nach der anspruchsgemäßen Weiterbildung mit einer Empfangsgegenstelle lässt sich durch Auswerten der Zeitdifferenz ein Radius ermitteln, auf welchem sich der Bediener im Umkreis um die Empfangsgegenstelle befindet. Sind gemäß einer Weiterbildung zumindest zwei Empfangsgegenstellen vorhanden, kann wiederum für jede Empfangsgegenstelle ein Radius ermittelt werden, durch schneiden der beiden Radien lässt sich die Position des Bedieners ermitteln. Je mehr Empfangsgegenstellen vorhanden sind desto genauer lassen sich dieser Schnittpunkt und damit die Position des Bedieners ermitteln und desto störunempfindlicher wird die Positionsortung bzw. Positionsbestimmung. Da Werkzeugmaschinen aus Stabilitätsgründen zumeist sehr massiv ausgebildet sind und bevorzugt aus Metall bestehen, besteht für die zweite und dritte Signalverbindung die Gefahr, dass die Signalverbindung durch Gerätschaften der Werkzeugmaschine bzw. durch den Bediener selbst beeinträchtig wird. Sind nun mehrere Empfangsgegenstellen vorhanden, erhöht dies die Empfangssicherheit und damit die Zuverlässigkeit der Positionsortung bzw. Positionsbestimmung.

Ferner ist es möglich, dass die Aussendung von Signalen über die zweite und dritte Signalverbindung asynchron bzw. zeitversetzt erfolgt. Da über die zweite Signalverbindung die Übermittlung der Steuerungskommandos erfolgt, wird diese bevorzugt dann aktiv sein, wenn vom Bediener eine Steuerung der Werkzeugmaschine initiiert wird. In diesem Fall kann vom Auswertemodul die dritte Signalverbindung aktiviert werden, welche dann bspw. periodisch ein Signal aussendet. Zur Ermittlung der Laufzeitdifferenz müssen in diesem Fall Sender und Empfänger synchronisiert sein, muss also das Positionsortungs- bzw. Positionsbestimmungsmodul den Absendezeitpunkt kennen, bspw. indem mit der Signalübertragung über die zweite und dritte Signalverbindung ein Zeitstempel mit übertragen wird.

Mögliche Weiterbildungen sind ferner, dass das Positionsortungs- bzw. Positionsbestimmungsmodul für mehrere Empfangsgegenstellen lediglich die Laufzeitdifferenzen der zweiten Signalverbindung auswertet, dies entspricht einer Funkortung, bzw. ist eine rein Ultraschall basierte Positionsortungs- bzw. Positionsbestimmung möglich, indem lediglich die dritte Signalverbindung ausgewertet wird.

Die Erfindung betrifft auch ein Verfahren zum Bedienen einer Werkzeugmaschine, umfassend eine erfindungsgemäße Maschinensteuerung. Dabei wird vom Wandler des Sensormoduls eine Einwirkung einer physikalischen Größe erfasst und als elektrische Kenngröße an das Auswertemodul übermittelt, welches daraus durch zeitliche Analyse ein Signalprofil generiert, in welchem Signalprofil eine Zuordnung einer Zeitspanne zu einem Signalwert bzw. zu einer Signalwertänderung hinterlegt wird, und wobei ferner das Auswertemodul das generierte mit zumindest einem hinterlegten Signalprofil vergleicht und darauf basierend, das Steuerungssignal generiert. Als physikalische Größe werden bspw. eine Krafteinwirkung und/oder eine Beschleunigung verstanden. Der besondere Vorteil des erfindungsgemäßen Verfahrens liegt darin, dass durch zeitliche Analyse der vom Wandler abgegebenen elektrischen Kenngröße ein Signalprofil generiert wird in welchem Signalprofil eine zeitliche Abfolge der Änderung eines Signalwerts bzw. ein zeitliches Einhalten von Signalwertgrenzwerten hinterlegt ist. Durch den Vergleich des erfassten mit einem hinterlegten Referenzsignalprofil ist es dem Bediener der Maschinensteuerung möglich, eine Mehrzahl unterschiedlicher Bedienkommandos abzugeben, ohne dafür die Aufmerksamkeit von der Werkzeugmaschine bzw. dem zu bearbeitenden Werkteil abwenden zu müssen. Insbesondere ist es somit durch Hinterlegung mehrere Signalprofile möglich, dem Steuerungsmodul eine Mehrzahl von Steuerungssignalen zu übermitteln und somit eine Mehrzahl unterschiedlicher Bedienhandlungen in vorteilhafter Weise durchzuführen.

Nach einer Weiterbildung ist vorgesehen, dass das Auswertemodul die Steigung der Änderung des elektrischen Signals ermittelt, wodurch die Betätigungsgeschwindigkeit des Sensormoduls als Basis für die Generierung eines Signalprofils und damit verbunden, eines Steuerungssignals dienen kann.

Von Vorteil ist ferner eine Weiterbildung, nach der das Auswertemodul die Zeitdauer des Über- bzw. Unterschreiten des Schwellwertes ermittelt, da somit die Gefahr einer Fehlbedienung vermieden wird und insbesondere wiederum eine Mehrzahl von Bedienkommandos durch die Ermittlung unterschiedlicher Steuerungssignale möglich ist. Beispielsweise kann ein Signalprofil dadurch gekennzeichnet sein, dass in einer bestimmten Abfolge und unter Einhaltung gewisser Zeiten eine physikalische Größe mit einer bestimmten Intensität auf das Sensormodul einwirken muss. Auch kann ein Signalprofil dadurch gekennzeichnet sein, dass zur Erkennung eines gültigen Signalprofils stets am Beginn eine bestimmte Zeit lang eine Krafteinwirkung oder eine Beschleunigung aufgrund einer vorgegebenen Bewegung auf das Sensormodul gegeben sein muss.

Um eine Zuordnung des Sensormoduls zum Auswerte- bzw. Steuerungsmodul zu gewährleisten, weist gemäß einer Weiterbildung das Sensormodul eine Identifikationskennung auf, welche an das Auswertemodul bzw. an das Steuerungsmodul übermittelt wird. Somit lässt sich sicherstellen, dass nur jenes Sensormodul letztendlich mit dem Steuerungsmodul kommunizieren bzw. interagieren darf, welches die korrekte bzw. zugeordnete Identifikationskennung aufweist. Somit können mehrere Maschinensteuerungen nebeneinander betrieben werden, ohne dass die Gefahr besteht, dass es aufgrund des drahtlos ausgebildeten Kommunikationsweges zu einer fehlerhaften Zuordnung und damit zu einer Fehlbedienung kommen kann. Das Identifikationsmerkmal kann jedoch beispielsweise auch derart ausgebildet sein, dass unabhängig von der Signalübertragung ein Auslesen des Identifikationsmerkmals möglich ist, beispielsweise ist eine Ausbildung als RFID-Merkmal möglich.

Nach einer Weiterbildung wird bei Überschreiten eines Grenzwertes der Signalwertänderung ein Alarmsignal als Steuerungssignal abgegeben. Insbesondere im Hinblick auf die Ermittlung von Notsignalen hat dies den Vorteil, dass Notsignale üblicherweise durch eine sehr schnelle bzw. plötzliche Betätigung gekennzeichnet sind. Bei einem bisher bekannten Fußschalter wird nach durchdrücken der Schaltwippe, insbesondere nach Überwinden eines festgelegten Normwerts von 350 N, die Verfahrbewegung des Pressenbalkens sofort gestoppt. Beim anspruchsgemäß weitergebildeten Verfahren kann nun die Betätigungskraft und/oder die Betätigungsgeschwindigkeit des Sensormoduls als Maß für die Dringlichkeit eines Bedienkommandos herangezogen werden. Auch kann dadurch beispielsweise eine variable Verfahrgeschwindigkeit des Pressenbalkens abgeleitet werden, was insbesondere dann von Vorteil ist, wenn der Pressenbalken langsam an das Werkteil heranbewegt werden soll, um eine genaue Ausrichtung des Werkteils zu ermöglichen

Zum besseren Verständnis der Erfindung wird diese anhand der nachfolgenden Figuren näher erläutert.

Es zeigen jeweils in stark schematisch vereinfachter Darstellung:
- Fig. 1: eine erfindungsgemäße Maschinensteuerung in einer Werkzeugmaschine;
- Fig. 2: eine mögliche Ausführung der erfindungsgemäßen Maschinensteuerung, bei der das Sensor- und das Auswertemodul im Bekleidungsstück integriert angeordnet sind;
- Fig. 3: eine weitere mögliche Ausführung der erfindungsgemäßen Maschinensteuerung, bei der nur das Sensormodul im Bekleidungsstück angeordnet ist;
- Fig. 4: a) und b) Beispiele für ein Signalprofil;
- Fig. 5: eine weitere mögliche Ausführung der erfindungsgemäßen Maschinensteuerung, bei der Sensor- und das Auswertemodul als Überziehteil ausgebildet ist;
- Fig. 6: eine Prinzipdarstellung der Positionsortung bzw. Positionsbestimmung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

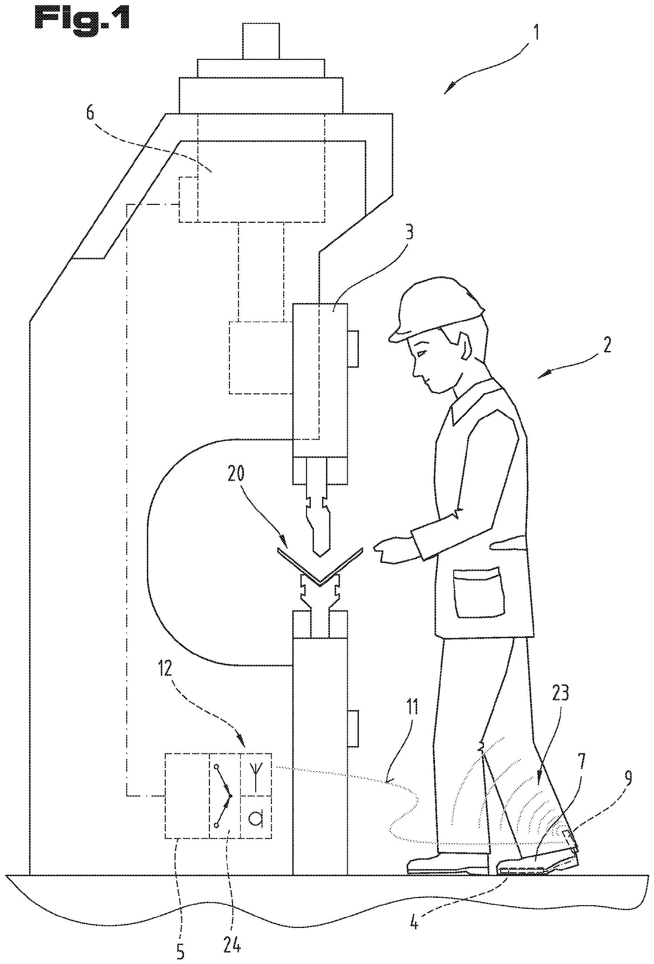

Fig. 1 zeigt eine Werkzeugmaschine 1, insbesondere eine Abkantpresse, mit einer erfindungsgemäßen Maschinensteuerung. Der Bediener 2 muss zur Durchführung der vorgegebenen Arbeitsschritte Einstellarbeiten sowie die Bedienhandlungen vornehmen, insbesondere wird dieser das zu bearbeitende Werkteil 20 in die Maschine einlegen und entsprechend ausrichten, um dann den Arbeitsvorgang auszulösen, im Fall einer Biegepresse also die Bewegung des Pressenbalkens 3, auslösen. Bei bekannten Maschinensteuerungen geschah dies zumeist durch einen Fußbetätigungsschalter, welcher vom Bediener im Arbeitsbereich entsprechend ausgerichtet bzw. positioniert werden musste und durch Betätigung die Verfahrbewegung initiierte bzw. nach Lösen der Betätigung die Rückfahrbewegung des Pressenbalkens auslöste. Der bekannte Fußbetätigungsschalter gestattet jedoch lediglich zwei Schaltzustände, was die Flexibilität der Bedienhandlung stark einschränkt. Zur Durchführung der Arbeitsschritte ist es beispielsweise von Vorteil, wenn der Pressenbalken 3 mit einer langsamen Verfahrbewegung bzw. einer der Betätigungskraft proportionalen Geschwindigkeit auf das Werkteil 20 zufährt, dort in einer Position angehalten werden kann, um anschließend durch weiteres Zusammenfahren den Biegevorgang durchzuführen. Eine derart komplexe Befehlsgabe ist jedoch mit einem bekannten Fußschalter nicht möglich. Auch muss der bekannte Fußschalter immer wieder neu ausgerichtet werden, damit dieser, abhängig von den durchzuführenden Arbeitsschritten, stets im Arbeitsbereich angeordnet ist, um eine Betätigung zu ermöglichen.

Die erfindungsgemäße Maschinensteuerung hat dagegen den Vorteil, dass in oder an einem Bekleidungsteil 7 des Bedieners 2 ein Sensormodul 4 und bevorzugt ein Auswertemodul 9 angeordnet ist, bspw. in oder an einem Schuh, und wobei im bzw. an der Werkzeugmaschine 1 ein Steuerungsmodul 5 angeordnet ist, welches Mittel aufweist, um zumindest ein Antriebsmittel 6 aktivieren bzw. deaktivieren kann, um einen Bearbeitungsschritt auszulösen. Ein derartiges Mittel kann bspw. gebildet sein durch einen Drehzahlsteller, elektromechanische oder elektronische Schalter für einen Antriebsmotor, Hydrauliksteuerungsgruppe, Ventilgruppe.

Von wesentlichem Vorteil der erfindungsgemäßen Maschinensteuerung ist jedoch, dass die zweite Signalverbindung 11 zwischen dem Auswertemodul 9 und dem Steuerungsmodul 5 bzw. die erste Signalverbindung zwischen dem Sensormodul 4 und dem Auswertemodul 9, drahtlos ausgebildet ist, sodass der Bediener in seiner Bewegungsfreiheit nicht eingeschränkt ist, also von jeder zugelassenen Position im Bereich der Werkzeugmaschine 1, Kommandos abgegeben kann und dass ferner aufgrund des im Signalweg angeordneten Auswertemoduls neben der Start-Stopp-Funktionalität ferner eine Mehrzahl unterschiedlicher Steuerkommandos generiert werden kann.

Erfindungsgemäß ist jedoch auch vorgesehen, dass zwei oder mehrere Bediener gleichzeitig an der Werkzeugmaschine arbeiten bspw. wenn die zu bearbeitenden Werkteile für einen einzelnen Bediener zu groß sind. Dann werden die einzelnen Bediener jeweils ein Sensormodul und ggf. auch das Auswertemodul an bzw. in einem Bekleidungsteil angeordnet haben und wird das Steuerungsmodul die Arbeitsbewegung der Werkzeugmaschine erst dann freigeben, wenn alle der Maschine zugeordneten Bediener das Freigabesignal erteilt haben.

Ferner ist mit der erfindungsgemäßen Maschinensteuerung vorgesehen, dass nur ein zugeordneter Bediener bzw. eine zugeordnete Bedienergruppe die Werkzeugmaschine bedienen kann. Daher ist eine Positionsortung bzw. Positionsbestimmung vorgesehen, bei der zumindest vor Auslösung der Arbeitsbewegung der Werkzeugmaschine geprüft wird, ob sich der dieses Kommando auslösende Bediener in einem zugelassenen Arbeitsbereich aufhält. Mit bekannten Fußschaltern war es möglich, dass die Verfahrbewegung ausgelöst wurde, obwohl sich der Bediener im Gefahrenbereich der Maschine aufhielt. In einer bevorzugten Ausbildung ist nun vorgesehen, dass zwischen Auswertemodul 9 und Steuerungsmodul 5 neben der drahtlosen zweiten Signalverbindung 11 zusätzlich eine akustische dritte Signalverbindung 23 besteht. Ein Positionsortungs- bzw. Positionsbestimmungsmodul 28 des Steuerungsmoduls 5 wertet die Laufzeitdifferenz der zeitgleich vom Auswertemodul 9 ausgehenden Signale der zweiten 11 und dritten 23 Signalverbindung aus und ermittelt daraus eine Positionsinformation. Weitere Details dazu finden sich in den nachfolgenden Figurenbeschreibungen.

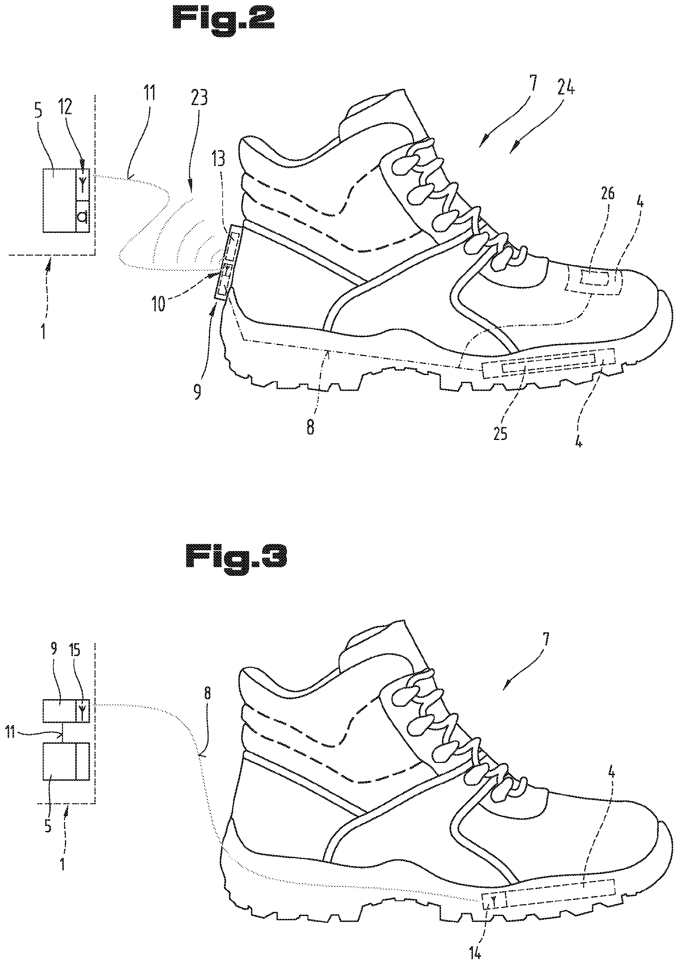

Fig. 2 zeigt eine mögliche Ausbildung der erfindungsgemäßen Maschinensteuerung, wobei das Sensormodul 4 in einem Bekleidungsstück 7, insbesondere einem Schuh, angeordnet ist. Über eine erste Signalverbindung 8 ist das Sensormodul 4 mit dem Auswertemodul 9 verbunden. Dieses Auswertemodul 9 weist ein Sende- und Empfangsmodul 10 auf, welches drahtlos über eine zweite Signalverbindung 11, insbesondere über eine HF-Kommunikationsverbindung, mit einem Sende- und Empfangsmodul 12 des Steuerungsmoduls 5 der nicht dargestellten Werkzeugmaschine 1 eine Kommunikationsverbindung herstellt. Ferner ist im Sende- und Empfangsmodul 10 des Auswertemodul 9 ein Akustischer-Wandler angeordnet, der zeitgleich mit der zweiten Signalverbindung 11 eine dritte Signalverbindung 23 mit dem Sende- und Empfangsmodul 12 des Steuerungsmoduls 5 herstellt, insbesondere wird ein Ultraschallsignal abgegeben. Zum Empfang des Ultraschallsignals weist das Sende- und Empfangsmodul 12 des Steuerungsmoduls 5 einen Akusto-Elektrischen-Wandler auf.

Das Auswertemodul 9 kann nun passiv ausgebildet sein, es weist also keine eigene Energieversorgung auf, jedoch ist auch eine Ausbildung möglich, nachdem ein elektrischer Energiespeicher 13 vorhanden ist, der das Auswertemodul 9, insbesondere das Sende- und Empfangsmodul 10, und gegebenenfalls das Sensormodul 4 mit elektrischer Energie versorgt. Es ist jedoch auch möglich, dass das Sensormodul 4 aktiv ausgebildet ist, wobei eine Krafteinwirkung bzw. eine Beschleunigung auf das Sensormodul eine elektrische Spannung generiert, die einerseits zum Betrieb des Auswertemoduls 9 und zum Aufbau der zweiten Signalverbindung 11 genutzt werden kann In einer Weiterbildung ist jedoch auch vorgesehen, dass die vom Sensormodul 4 generierte Spannung zusätzlich dazu verwendet werden kann, den elektrischen Energiespeicher 13 zu füllen. Somit wird durch die Bewegung des Bedieners vor der Werkzeugmaschine, neben der Abgabe einer veränderlichen elektrischen Kenngröße Generierung eines Signalprofils, auch kontinuierlich elektrische Energie generiert, um die im Bekleidungsstück 7 angeordneten Komponenten der erfindungsgemäßen Maschinensteuerung mit elektrischer Betriebsenergie zu versorgen.

In einer Weiterbildung kann die zweite Signalverbindung 11 bidirektional ausgebildet sein, also dass das Auswertemodul 9 und das Steuerungsmodul 5 jeweils ein Sende- und Empfangsmittel aufweisen, wodurch vom Steuerungsmodul 5 eine Rückmeldung an den Bediener gegeben werden kann. Das Sensormodul 4 kann in diesem Fall beispielsweise auch als Aktuator fungieren, beispielsweise wenn das Sensormodul 4 als piezoelektrisches Element ausgebildet ist, ist sowohl eine Sensor- als auch eine Aktuatorfunktionalität möglich. Es kann jedoch auch vorgesehen sein, dass ein zusätzliches Aktuatormodul, in der Zeichnung nicht dargestellt, vorgesehen ist, welches beispielsweise eine taktile, insbesondere eine mechano taktile Rückmeldung an den Bediener ermöglicht. Dieser Aktuator kann bspw. durch einen Vibrator gebildet sein, der bei Aktivierung seine Vibrationen an den Körperteil überträgt. Gerade in einer Fertigungseinrichtung mit einer Mehrzahl von Werkzeugmaschinen wird zumeist ein hoher Lärmpegel herrschen, sodass ein mechano taktiles Rückmeldesignal über ein erkanntes Signalprofil und ein davon abgeleitetes Steuerungssignal von Vorteil ist, da es in dem allgemeinen Gewirr an Betriebsmeldungen nicht untergehen kann.

Bevorzugt wird das Sensormodul 4 zwei Wandler aufweisen, welche an unterschiedlichen Positionen des Bekleidungsstücks angeordnet sind. Bei einem Schuh wird bspw. im Bereich des Ballens ein Drucksensor 25 und im Bereich des Vorfußes oder im Fersenbereich ein Beschleunigungssensors 26 angeordnet sein. Die Positionen können jedoch abhängig von den zu erfassenden physikalischen Größen variieren.

Zur Vereinfachung wird für die weitere Beschreibung das Bekleidungsstück 7 mit dem angeordneten Sensormodul 4 und dem Auswertemodul 9 als Bedienteil 24 bezeichnet.

Zur Zuordnung des Bedienteils 24 zu einem Steuerungsmodul 5 ist vorgesehen, dass die zweite 11 und/oder die dritte 23 Signalverbindung codiert ausgebildet sind. Dazu wird bei der Installation der Werkzeugmaschine dem Steuerungsmodul 5 ein eindeutiger Code zugewiesen, der derart gewählt ist, dass selbst bei einer dichten Anordnung von Werkzeugmaschinen in einer Produktionseinrichtung, eine gegenseitige Beeinflussung der Codes nicht gegeben ist, also eine größtmögliche Störsicherheit gewährleistet ist. Bei der initialen Zuordnung eines Bedienteils 24 zum Steuerungsmodul 5 der Werkzeugmaschine 1, wird über die zweite Signalverbindung 11 diese Maschinencodierung bzw. ein davon abgeleiteter Code an das Auswertemodul 9 übertragen. Das Sende- und Empfangsmodul 10 des Auswertemoduls 9 verwendet diesen übertragenen Code um die Signalübertragung über die zweite 11 und bevorzugt auch über die dritte Signalverbindung 23 zu verschlüsseln. Gegebenenfalls kann vom Auswertemodul der übermittelte Code mit einer, dem Auswertemodul eigenen Codierung, ergänzt werden, um somit eine Verschlüsselung zumindest der zweiten Signalverbindung 11 zu erreichen, die nur für die spezifische Kombination des Auswertemoduls und des Steuerungsmoduls gültig ist. Dadurch wird gewährleistet, dass nur das zugeordnete Bedienteil eine Kommunikation mit dem Steuerungsmodul aufbauen kann.

Mit dieser Codierung ist ferner eine Weiterbildung möglich, nach der in einem Speichermittel des Steuerungsmoduls 5 mehrere Benutzerprofile hinterlegt sind, welche mit der Codierung des Bedienteils verknüpft werden können, so dass jeder Bediener bei der Anmeldung an der Werkzeugmaschine auf seine spezifischen Maschineneinstellung zugreifen kann und dass insbesondere die Werkzeugmaschine auf die spezifischen Bedürfnisse des Bedieners eingestellt werden kann.

Fig. 3 zeigt eine weitere mögliche, besonders einfache und sehr kostengünstige Ausbildung der erfindungsgemäßen Maschinensteuerung bei der nur das Sensormodul 4 im Bekleidungsstück 7 des Bedieners angeordnet ist und drahtlos über ein Sendemittel 14 die erste Signalverbindung 8 mit einem Empfangsmittel 15 des Auswertemodul 9 herstellt. Das Auswertemodul 9 ist über die zweite Signalverbindung 11 mit dem Steuerungsmodul 5 verbunden. Bei dieser Ausführung ist das Sensormodul 4 bevorzugt passiv ausgebildet, es wird also die auf das Sensormodul 9 einwirkenden Kraft bzw. Beschleunigung zusätzlich zur Erfassung der elektrischen Kenngröße auch zur Generierung der für die Erfassung erforderlichen elektrischen Energie genützt. Beispielsweise kann dies durch die Ausbildung als piezoelektrisches Element oder einen elektromagnetischen Wandler geschehen. Es ist jedoch auch möglich, dass das Sensormodul 4 als frequenzbestimmendes Bauteil eines elektrischen Schwingkreises dient, bspw. als veränderlicher Widerstand bzw. als veränderliche Kapazität, wobei das Sende- und Empfangsmodul 12 des Auswertemoduls 9 als Sende- und Empfangsmittel ausgebildet ist, welche eine dem Schwingkreis anregende elektromagnetische Welle aussendet und die Variationen der Schwingkreisfrequenz aufgrund der Krafteinwirkung auf das Sensormodul 4 auswertet und darauf basierend das Signalprofil bildet.

Diese Ausbildung hat insbesondere den Vorteil, dass am Bekleidungsstück 7 nur das Sensormodul 4 angeordnet ist, das aufwendigere Auswertemodul 9 ist im Bereich der Werkzeugmaschine angeordnet, wo Platz- und Ressourcenverfügbarkeit ein geringeres Problem darstellt. Da es aufgrund der bestimmungsgemäßen Benutzung zu einer Abnützung des Bekleidungsstücks 7 kommen kann und dieses daher ausgetauscht wird, ist es von Vorteil, wenn lediglich das Sensormodul dadurch unbrauchbar wird und nicht auch das Auswertemodul mit entsorgt wird. Bei der Ausbildung nach Fig. 2 könnte das Auswertemodul koppelbar ausgebildet sein und ließe sich von einem Bekleidungsstück auf das nächste übertragen. Da das Sensormodul 4 ferner einer ständigen Belastung ausgesetzt ist, ist es von Vorteil, wenn dieses möglichst einfach aufgebaut ist, um einerseits den Belastungen standzuhalten und andererseits bei einer möglichen Beschädigung aufgrund der Belastung bzw. beim Austausch des Bekleidungsstückes nur einen minimalen Kostenfaktor zu verursachen.

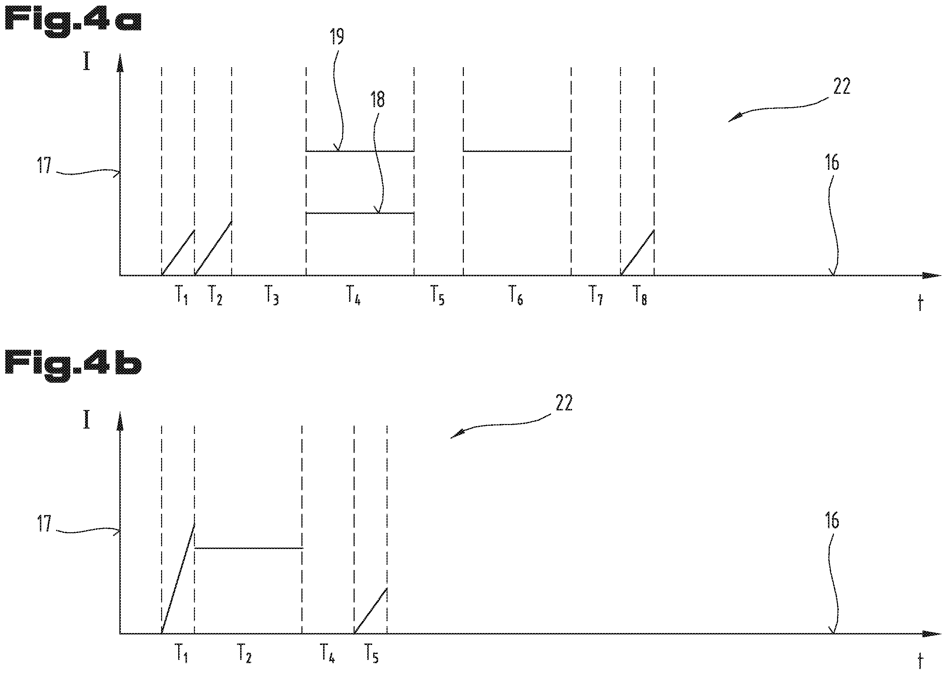

Die Fig. 4a und 4b zeigen zwei mögliche Signalprofile 22 in stark schematisierter Darstellung. Über der Zeitachse 16 ist ein Maß für die Intensität 17 der einwirkenden physikalischen Größe aufgetragen. Damit das Auswertemodul eindeutig erkennen kann, wann es sich um den Beginn eines Signalprofils 22 handelt, um somit jene erfassten Signale auszuschließen, die aufgrund der natürlichen Bewegung des Bedieners im Bekleidungsstück gegeben sind, ist vorgesehen, dass am Beginn der Bediener eine Startsequenz auslösen muss. Dazu wird dieser beispielsweise zweimal hintereinander eine ansteigende Krafteinwirkung auf das Sensormodul ausüben, wie dies in den Abschnitten T1 und T2 dargestellt ist. Durch den Anstieg lässt sich festlegen, dass die Krafteinwirkung mäßig stark und mit mittlerer Anstiegsgeschwindigkeit erfolgen soll. Diese Parameter sind so zu wählen, dass es durch die natürliche Bewegung zu keiner Initiierung eines Signalprofils 22 kommt. Zur Unterscheidung von einer natürlichen Bewegung ist ferner vorgesehen, dass vor der Startsequenz eine gewisse Zeitspanne das Sensormodul in Ruhe gehalten werden muss, wodurch sicher gestellt ist, dass die nachfolgende Startsequenz unzweifelhaft als solche zu erkennen ist. Die Startsequenz kann auch durch ein Prellen gebildet sein, also dass der Bediener den Schuh in einer kurzen Vorwärtsbewegung hart aufsetzt.

Nach dieser Startsequenz ist vorgesehen, dass eine bestimmte Zeit lang keine Krafteinwirkung auf das Sensormodul erfolgen soll (Abschnitt T3) und danach über einen Zeitraum T4 eine möglichst konstante Krafteinwirkung, welche sich in einem Bereich zwischen einem Minimum 18 und einem Maximum 19 liegt, erfolgen soll. Nach dieser Phase ist wiederum eine Pause vorgesehen (Abschnitt T5), wobei anschließend an diese Pause eine möglichst konstante Krafteinwirkung erfolgen soll, mit einem Kraftwert der über dem zuvor ausgeübten Kraftwert liegt (Abschnitt T6). Daran abschließend erfolgt wiederum eine Pause (T7), in der keine Krafteinwirkung erfolgen soll. Das Signalprofil 22 wird durch einen kurzen Kraftanstieg geringer Anstiegsgeschwindigkeit und Intensität (T8) abgeschlossen.

Im Diagramm ist schematisch dargestellt, dass im Signalprofil sowohl der Kraftanstieg auf das Sensormodul, als auch die Stärke der Krafteinwirkung hinterlegt sein kann. Somit kann durch die Kombination dieser beiden Merkmale eine Mehrzahl unterschiedlicher Signalprofile generiert werden und insbesondere eine sehr feine Steuerung der Arbeitsaktionen der Werkzeugmaschine vorgenommen werden. Beispielsweise ist es möglich, die Verfahrgeschwindigkeit des Pressenbalkens durch die Stärke der Krafteinwirkung auf das Sensormodul zu beeinflussen, wenn vorher vom Bediener die entsprechenden Aktionen getätigt wurden und das Auswertemodul das Signalprofil analysiert und ein entsprechendes Steuersignal generiert hat.

Insbesondere sei jedoch darauf hingewiesen, dass die dargestellten Kraftverläufe nur beispielhaft zu sehen sind. Gerade im Hinblick auf die Start- bzw. Endsequenz sind mehrere Möglichkeiten denkbar, um den Beginn eines Signalprofils eindeutig erkennen zu können. Die dargestellte doppelte Betätigung im Sinn eines Doppelklicks ist lediglich eine mögliche Ausbildung.

Ein weiterer Vorteil der erfindungsgemäßen Maschinensteuerung ist in Abbildung 4b dargestellt, da durch die Auswertung des Kraftanstiegs bzw. der Intensität auch Alarmsignale abgeleitet werden können. Eine Notsituation kann beispielsweise dadurch eingeleitet werden, dass ein sehr kurzer, sehr hoher Kraftanstieg erfolgt (Abschnitt T1), wobei unmittelbar anschließend für einen Zeitraum eine möglichst konstante Krafteinwirkung hoher Intensität erfolgt (Abschnitt T2). Bestätigt wird das Alarmsignal durch einen kurzen Kraftanstieg (T5) welcher nach einer kurzen Pause (T4) erfolgt. Bei einer Gefährdung des Bedieners bzw. des Werkteils ist es von Vorteil, wenn der Bediener ohne Veränderung seiner Position einen Alarm auslösen kann, da dies unter Umständen nicht oder nur mehr schwer möglich sein würde.

Somit wird eine deutlich verbesserte Bedienmöglichkeit für Werkzeugmaschinen geschaffen, wodurch der Bediener einer derartigen Maschine die Freiheit hat, eine Vielzahl möglicher Kommandos auszulösen, ohne seine Aufmerksamkeit von dem Arbeitsbereich bzw. dem Werkteil abwenden zu müssen. Insbesondere in Gefahrensituationen hat dies den Vorteil, dass der Bediener nicht gezwungen ist, einen externen Schalter zu betätigen, sondern wiederum ohne Veränderung seiner Position ein Alarmkommando auslösen kann und somit beispielsweise die weitere Bewegung der Werkzeuge der Maschine stoppt, bzw. die aktuell durchgeführte Bewegung umkehrt.

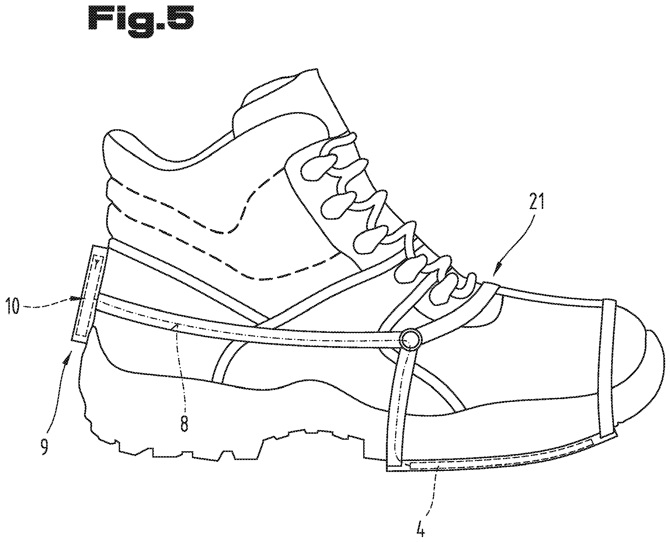

Fig. 5 zeigt ein weiteres mögliches Ausführungsbeispiel, wodurch die Anwendungsmöglichkeiten der erfindungsgemäßen Maschinensteuerung erweitert werden. Dabei ist das Sensormodul 4 als Überziehteil 21 ausgebildet und kann somit über einem vom Bediener getragenen Bekleidungsstück, im dargestellten Fall einem Schuh, getragen werden. Das Sensormodul ist dabei bspw. mittels einer an die physiologischen Gegebenheiten anpassbare Haltvorrichtung am Bekleidungsstück angeordnet. Gegenüber einer Anordnung im Bekleidungsstück hat das den Vorteil, dass keine spezifische Ausbildung des Bekleidungsstücks erforderlich ist. Wenn bspw. mehrere Bediener an einer Werkzeugmaschine arbeiten können, braucht mit dieser Ausbildung nicht für jeden Bediener ein spezifisches Bekleidungsstück hergestellt werden, was einen bedeutenden Kostenvorteil hat. Der jeweils aktive Bediener zieht das Überziehteil über sein Bekleidungsstück und kann damit die Werkzeugmaschine bedienen.

Nicht dargestellt ist eine mögliche weitere Ausbildung, nach der das Sensormodul als Einlegesohle für einen Schuh ausgebildet ist. Diese Einlegesohle kann aufgrund ihrer geringen Dicke in jeden Schuh eingelegt werden, ohne den Tragekomfort wesentlich einzuschränken. Somit ist eine weitere universelle Anwendungsmöglichkeit gegeben.

Eine weitere Ausführung kann darin bestehen, dass das Sensormodul und das Auswertemodul integriert und als Einsteckmodul ausgebildet sind, welches in eine vorhandene Ausnehmung des Bekleidungsteil eingeschoben wird. Bei einem Schuh kann dieses Modul bspw. im Bereich der Vordersohle eingeschoben werden, so dass der Wandler des Sensormoduls im Bereich des Vorfußes angeordnet ist und damit die vom Bediener ausgeübten Kräfte bzw. Beschleunigungen erfassen kann.

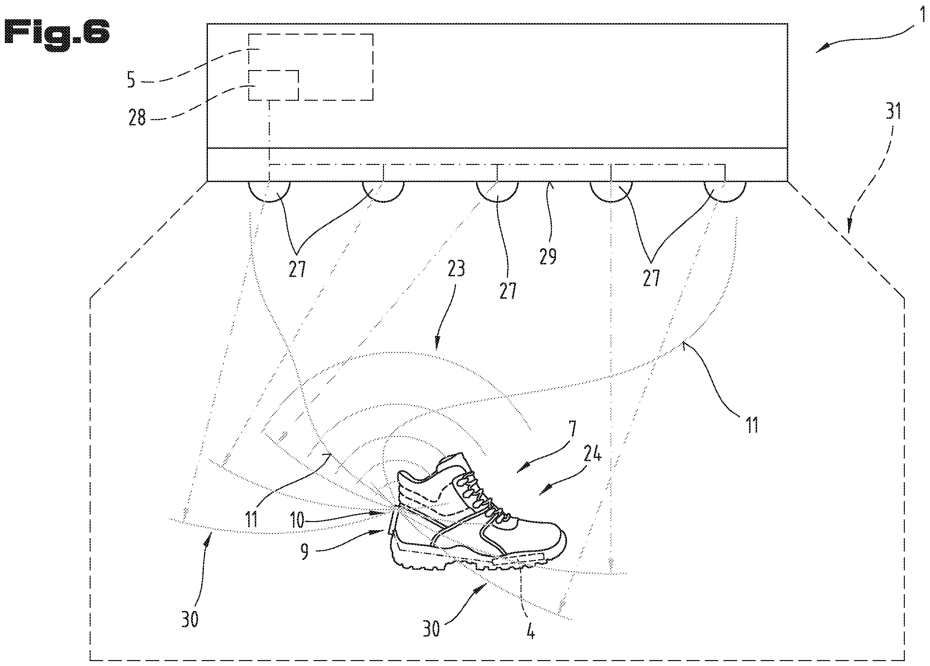

Fig. 6 zeigt vereinfacht das Prinzip der Positionsortung bzw. Positionsbestimmung bei der erfindungsgemäßen Maschinensteuerung. Ein bedeutender Sicherheitsaspekt liegt darin, dass ein Steuersignal nur dann ausgeführt wird, wenn sich der dieses Steuersignal auslösende Bediener innerhalb eines festgelegten Arbeitsbereichs befindet. Beispielsweise ist es bei bekannten Fußschaltern möglich, dass sich ein Bediener im Gefahrenbereich aufhält, bspw. hinter der Werkzeugmaschine, und die Werkzeugmaschine von einem anderen Bediener aktiviert wird.

Mit einer vorhandenen Positionsortung bzw. Positionsbestimmung ist es nun möglich den Aufenthaltsort eines Bedieners bei der Auslösung des Signalprofils bzw. des Steuerungssignals so genau festzulegen, dass sicherheitsrelevante Vorgaben jedenfalls eingehalten werden können. Dazu sind an einer Frontseite 29 der Werkzeugmaschine 1 zumindest zwei Empfangsgegenstellen 27 angeordnet, welche zum Empfang eines HF- und eines Ultraschallsignals ausgebildet sind. Vom Sende- und Empfangsmittel 10 des Auswertemoduls 9 wird über die zweite Signalverbindung 11 ein HF-Signal ausgesandt und zeitgleich mittels eines Schallgebers über die dritte Signalverbindung 23 ein Ultraschallsignal abgegeben. Da ein Schallsignal eine deutlich geringere Ausbreitungsgeschwindigkeit als eine HF-Welle besitzt, wird das Schallsignal um eine Zeitdifferenz später bei den Empfangsgegenstellen 27 eintreffen. Aus dieser Zeitdifferenz lässt sich für jede Empfangsgegenstelle 27 ein Abstandskreis 30 ermitteln, wobei durch Schneiden von Abstandskreisen 30 zumindest zweier Empfangsgegenstellen die Position des Senders der Signale bestimmt werden kann. Je mehr Abstandskreise für die Ermittlung des Schnittpunkts zur Verfügung stehen, desto genauer kann die Position bestimmt werden und desto störunempfindlicher ist das System. Daher lässt sich ein zulässiger Arbeitsbereich 31 festlegen in welchem sich der Bediener aufhalten muss, um ein Steuerungssignal abgeben zu können. Bei der bevorzugten Ausbildung mit 5 Empfangsgegenstellen 27 kann die Position bis auf 30 cm genau bestimmt werden.

Da eine Werkzeugmaschine zumeist ein sehr massives Teil ist, ist durch die Anordnung der Empfangsgegenstellen 27 an der Front 29 weitestgehend verhindert, dass Signale aus seitlicher oder rückwertiger Richtung durch die Maschine geblockt werden.

Zumindest eine der Empfangsgegenstellen 27 wird auch ein Sendemittel aufweisen, um wie bereits beschrieben, Kommandos vom Steuerungsmodul 5 an das Auswertemodul 9 übertragen zu können.

Die hier dargestellten Beispiele beziehen sich auf einen Schuh als Bekleidungsteil, in welchem das Sensormodul und ggf. das Auswertemodul angeordnet sein können. Dieselben Vorteile erhält man auch, wenn das Bekleidungsteil ein Handschuh ist. Auch dadurch lässt sich gewährleisten, dass der Bediener Steuerkommandos abgeben kann, ohne die Aufmerksamkeit vom Werkteil bzw. vom Arbeitsbereich abzuwenden.

In der Darstellung des Auswertemoduls sind das Speichermittel und das Vergleichsmodul des Auswertemoduls nicht dargestellt. Im Speichermittel ist zumindest ein Referenz-Signalprofil hinterlegt, welches vom Vergleichsmodul mit dem, aus den erfassten elektrischen Kenngrößen generierten Signalprofil verglichen wird, um daraus das Steuerungssignal zu bilden. Vom Vergleichsmodul wird geprüft, ob das erfasste Signalprofil mit einem hinterlegten Referenz-Signalprofil in Übereinstimmung gebracht werden kann, wobei die Übereinstimmung bevorzugt unscharf geprüft wird. Beispielsweise wird geprüft, ob die im Referenz-Profil hinterlegten Zeitabschnitte vorhanden sind und ob der Anstieg der Krafteinwirkung bzw. die relativen Intensitätswerte der einzelnen Abschnitte mit einem Referenz-Signalprofil in Übereinstimmung gebracht werden können.

Die Ausführungsbeispiele zeigen mögliche Ausführungsvarianten der erfindungsgemäßen Maschinensteuerung wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Maschinensteuerung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Werkzeugmaschine
- 2: Bediener
- 3: Pressenbalken
- 4: Sensormodul
- 5: Steuerungsmodul

- 6: Antriebsmittel
- 7: Bekleidungsstück
- 8: Erste Signalverbindung
- 9: Auswertemodul
- 10: Sende- und Empfangsmodul des Auswertemoduls

- 11: Zweite Signalverbindung
- 12: Sende- und Empfangsmodul des Steuerungsmoduls
- 13: Elektrischer Energiespeicher
- 14: Sendemittel
- 15: Empfangsmittel

- 16: Zeitachse
- 17: Maßzahl
- 18: Minimum
- 19: Maximum
- 20: Werkteil

- 21: Überziehteil
- 22: Signalprofil
- 23: Dritte Signalverbindung
- 24: Bedienteil
- 25: Drucksensor

- 26: Beschleunigungssensor
- 27: Empfangsgegenstelle
- 28: Positionsortungs- bzw. Positionsbestimmungsmodul
- 29: Front
- 30: Abstandskreis

- 31: Arbeitsbereich

## Patentansprüche

1. Maschinensteuerung umfassend
ein Sensormodul (4), ein Auswertemodul (9) und ein Steuerungsmodul (5) wobei
das Steuerungsmodul (5) Mittel aufweist, um basierend auf einem eingehenden Steuerungssignal, zumindest ein Antriebsmittel (6) einer Werkzeugmaschine (1) zu aktivieren bzw. zu deaktivieren
wobei ferner das Sensormodul (4) einen Wandler aufweist, welcher eine auf das Sensormodul (4) einwirkende physikalische Größe in eine proportionale elektrische Kenngröße umwandelt wobei ferner das Auswertemodul (9) über eine erste Signalverbindung (8) mit dem Sensormodul (4) und über eine bidirektionale zweite Signalverbindung (11) mit dem Steuerungsmodul (5) verbunden ist,
wobei ferner die zweite Signalverbindung (11) drahtlos ausgebildet ist,
wobei das Sensormodul (4) in oder an einem Schuh angeordnet ist,
**dadurch gekennzeichnet, dass**
die zweite Signalverbindung (11) durch eine Hochfrequenz Nahbereichs-Kommunikationsverbindung gebildet ist, und dass
zwischen dem Auswertemodul (9) und dem Steuerungsmodul (5) eine auf Ultraschall basierende, drahtlose dritte Signalverbindung (23) besteht, und dass
das Auswertemodul (9) durch eine Potential- und/oder eine Änderungsanalyse aus der erfassten elektrischen Kenngröße ein Signalprofil bildet, das Auswertemodul (9) ein Speichermittel aufweist, in welchem ein Referenz-Signalprofil hinterlegt ist,
das Auswertemodul (9) ferner ein Vergleichsmodul aufweist, welches das erfasste Signalprofil mit dem hinterlegten Signalprofil vergleicht und darauf basierend, das Steuerungssignal generiert und dass das Steuerungsmodul (5) ein Positionsortungs- bzw. Positionsbestimmungsmodul (28) zumindest zwei Empfangsgegenstellen (27) aufweist, welches Positionsortungs- bzw. Positionsbestimmungsmodul (28) mittels einer Analyse der Laufzeitdifferenz zwischen zweiter (11) und dritter (23) Signalverbindung, zur Bestimmung der Position des vom Benutzer getragenen Auswertemoduls (9) im Arbeitsbereich (31) ausgebildet ist, wobei das Steuerungssignal nur ausgeführt wird, wenn sich der dieses Steuerungssignal auslösende Benutzer innerhalb eines festgelegten Arbeitsbereichs befindet.

2. Maschinensteuerung nach Anspruch 1, **dadurch gekennzeichnet, dass** zumindest das Sensormodul (4) als Überziehteil ausgebildet ist.

3. Maschinensteuerung nach einem der Ansprüche 1 oder 2, **dadurch gekennzeichnet, dass** das Sensor- (4) und das Auswertemodul (9) integriert angeordnet sind.

4. Maschinensteuerung nach Anspruch 3, **dadurch gekennzeichnet, dass** die Anordnung des Sensor- (4) und des Auswertemoduls (9) als Einsteckmodul ausgebildet ist.

5. Maschinensteuerung nach einem der Ansprüche 3 oder 4, **dadurch gekennzeichnet, dass** mit dem Auswertemodul (9) ein Aktuator verbunden ist.

6. Maschinensteuerung nach einem der Ansprüche 1 oder 2, **dadurch gekennzeichnet, dass** das Auswerte- (9) und das Steuerungsmodul (5) integriert angeordnet sind, wobei die erste Signalverbindung (8) zwischen dem Sensormodul (4) und den integriert angeordneten Modulen (9, 5) drahtlos ausgebildet ist.

7. Maschinensteuerung nach einem der Ansprüche 1 bis 6, **dadurch gekennzeichnet, dass** im Signalprofil (22) zumindest eine Folge zeitdiskreter Signalwert-Änderungswerte hinterlegt ist.

8. Maschinensteuerung nach einem der Ansprüche 1 bis 7, **dadurch gekennzeichnet, dass** im Signalprofil (22) eine Zeitdauer des Über- bzw. Unterschreiten eines Schwellwertes hinterlegt ist.

9. Maschinensteuerung nach einem der Ansprüche 1 bis 8, **dadurch gekennzeichnet, dass** der Wandler als Drucksensor ausgebildet ist.

10. Maschinensteuerung nach einem der Ansprüche 1 bis 9, **dadurch gekennzeichnet, dass** der Wandler als Schwellwertsensor ausgebildet ist und zumindest einen Schwellwert aufweist.

11. Maschinensteuerung nach einem der Ansprüche 1 bis 10, **dadurch gekennzeichnet, dass** der Wandler als Beschleunigungssensor ausgebildet ist.

12. Maschinensteuerung nach einem der Ansprüche 1 bis 11, **dadurch gekennzeichnet, dass** der Wandler als aktives Bauteil ausgebildet ist.

13. Verfahren zum Bedienen einer Werkzeugmaschine (1), umfassend eine Maschinensteuerung nach einem der Ansprüche 1 bis 12, **dadurch gekennzeichnet, dass** vom Wandler des Sensormoduls (4) eine Einwirkung einer physikalischen Größe erfasst wird und als elektrische Kenngröße an das Auswertemodul (9) übermittelt wird,
welches daraus durch zeitliche Analyse ein Signalprofil (22) generiert, in welchem Signalprofil (22) eine Zuordnung einer Zeitspanne zu einem Signalwert bzw. zu einer Signalwertänderung hinterlegt wird,
wobei das Auswertemodul (9) ferner das generierte mit dem hinterlegten Signalprofil vergleicht und darauf basierend, das Steuerungssignal generiert.

14. Verfahren nach Anspruch 13, **dadurch gekennzeichnet, dass** das Auswertemodul (9) die Steigung der Änderung der elektrischen Kenngröße ermittelt.

15. Verfahren nach Anspruch 13 oder 14, **dadurch gekennzeichnet, dass** das Auswertemodul (9) die Zeitdauer des Über- bzw. Unterschreitens eines Schwellwerts ermittelt.

16. Verfahren nach einem der Ansprüche 13 bis 15, **dadurch gekennzeichnet, dass** das Sensormodul eine Identifikationskennung aufweist, welche an das Auswertemodul bzw. an das Steuerungsmodul übermittelt wird.

17. Verfahren nach einem der Ansprüche 13 bis 16, **dadurch gekennzeichnet, dass** bei Überschreiten eines Grenzwertes der Signalwert-Änderung ein Alarmsignal als Steuerungssignal abgegeben wird.

## Claims

1. A machine controller comprising
a sensor module (4), an evaluation module (9) and a control module (5),
wherein
the control module (5) comprises means for activating and/or deactivating at least one driving means (6) of a machine tool (1) based on an incoming control signal,
wherein further the sensor module (4) comprises a converter, which converts a physical quantity acting on the sensor module (4) into a proportional electrical parameter, wherein further the evaluation module (9) is connected to the sensor module (4) via a first signal connection (8) and to the control module (5) via a bidirectional second signal connection (11),
wherein further the second signal connection (11) is designed to be wireless,
wherein the sensor module (4) is arranged in or on a shoe,
**characterized in that**
the second signal connection (11) is formed by a high frequency close range communication connection and that
there is a wireless third signal connection (23) based on ultrasound between the evaluation module (9) and the control module (5), and that
the evaluation module (9) forms a signal profile from the detected electrical parameter by means of a potential and/or change analysis,
the evaluation module (9) comprises a storage means in which a reference signal profile is stored,
the evaluation module (9) further comprises a comparison module which compares the detected signal profile to the stored signal profile and, based thereon, generates the control signal
and that the control module (5) comprises a position detection and/or position determination module (28) with at least two receivers (27), said position detection and/or position determination module (28) being designed for determining the position of the evaluation module (9) carried by the user in the working region (31) by means of an analysis of the run time difference between the second (11) and the third signal connection (23), wherein the control signal is performed only if the user triggering this control signal is within a defined working region.

2. The machine controller according to claim 1, **characterized in that** at least the sensor module (4) is designed as an outer wear part.

3. The machine controller according to one of claims 1 or 2, **characterized in that** the sensor module (4) and the evaluation module (9) are disposed in an integrated arrangement.

4. The machine controller according to claim 3, **characterized in that** the arrangement of the sensor module (4) and the evaluation module (9) is designed as a push-in module.

5. The machine controller according to one of claims 3 or 4, **characterized in that** an actuator is connected to the evaluation module (9).

6. The machine controller according to one of claims 1 or 2, **characterized in that** the evaluation module (9) and the control module (5) are disposed in an integrated arrangement, wherein the first signal connection (8) between the sensor module (4) and the modules (9, 5) arranged so as to be integrated is designed to be wireless.

7. The machine controller according to one of claims 1 to 6, **characterized in that** at least one sequence of discrete-time signal value change values is stored in the signal profile (22).

8. The machine controller according to one of claims 1 to 7, **characterized in that** a duration of exceeding and/or falling below a threshold value is stored in the signal profile (22).

9. The machine controller according to one of claims 1 to 8, **characterized in that** the converter is designed as a pressure sensor.

10. The machine controller according to one of claims 1 to 9, **characterized in that** the converter is designed as a threshold sensor and comprises at least one threshold value.

11. The machine controller according to one of claims 1 to 10, **characterized in that** the converter is designed as an acceleration sensor.

12. The machine controller according to one of claims 1 to 11, **characterized in that** the converter is designed as an active component.

13. A method for operating a machine tool (1), comprising a machine controller according to one of claims 1 to 12, **characterized in that** by the converter of the sensor module (4), an action of a physical quantity is detected and transmitted as an electrical parameter to the evaluation module (9), which therefrom generates a signal profile (22) by temporal analysis, an assignment of a period of time to a signal value and/or to a signal value change being stored in said signal profile (22), wherein the evaluation module (9) further compares the generated to the stored signal profile and based thereon generates the control signal.

14. The method according to claim 13, **characterized in that** the evaluation module (9) determines the gradient of the change of the electrical parameter.

15. The method according to claim 13 or 14, **characterized in that** the evaluation module (9) determines the duration of exceeding and/or falling below a threshold value.

16. The method according to one of claims 13 to 15, **characterized in that** the sensor module has an identification code which is transmitted to the evaluation module and/or to the control module.

17. The method according to one of claims 13 to 16, **characterized in that** an alarm signal is output as a control signal if a threshold value of the signal value change is exceeded.

## Revendications

1. Commande de machine comprenant
un module de capteur (4), un module d'analyse (9) et un module de commande (5),
le module de commande (5) comprenant des moyens afin d'activer ou de désactiver au moins un moyen d'entraînement (6) d'une machine-outil (1)
le module de capteur (4) comprenant en outre un convertisseur qui convertit une grandeur physique agissant sur le module de capteur (4) en une grandeur caractéristique électrique proportionnelle,
le module d'analyse (9) étant en outre relié, par l'intermédiaire d'une première liaison par signaux (8), avec le module de capteur (4) et par l'intermédiaire d'une deuxième liaison par signaux bidirectionnelle (11) avec le module de commande (5),
la deuxième liaison par signaux (11) étant en outre conçue sans fil,
le module de capteur (4) étant disposé dans ou sur une chaussure,
**caractérisée en ce que**
la deuxième liaison par signaux (11) est constituée d'une liaison de communication haute fréquence à faible distance et **en ce que**
entre le module d'analyse (9) et le module de commande (5), se trouve une troisième liaison par signaux (23) sans fil basée sur des ultrasons et **en ce que**
le module d'analyse (9) génère, à l'aide d'une analyse de potentiel et/ou de variation à partir de la grandeur caractéristique électrique mesurée, un profil de signal,
le module d'analyse (9) comprend un moyen de mémoire dans lequel un profil de signal de référence est enregistré,
le module d'analyse (9) comprend en outre un module de comparaison qui compare le profil de signal avec le profil de signal enregistré et, sur cette base, génère le signal de commande, et **en ce que**
le module de commande (5) comprend un module de localisation ou de détermination de position (28) d'au moins deux postes de réception distants (27), ce module de localisation ou de détermination de position (28) étant conçu pour déterminer, au moyen de l'analyse de la différence de temps de parcours entre la deuxième (11) et la troisième (23) liaison par signaux, la position du module d'analyse (9) porté par l'utilisateur dans la zone de travail (31), le signal de commande n'étant exécuté que lorsque l'utilisateur déclenchant ce signal de commande se trouve dans une zone de travail déterminée.

2. Commande de machine selon la revendication 1, **caractérisée en ce qu'**au moins le module de capteur (4) est conçu comme une partie recouverte.

3. Commande de machine selon l'une des revendications 1 ou 2, **caractérisée en ce que** le module de capteur (4) et le module d'analyse (9) sont disposés de manière intégrée.

4. Commande de machine selon la revendication 3, **caractérisée en ce que** la disposition du module de capteur (4) et du module d'analyse (9) est conçu comme un module enfichable.

5. Commande de machine selon l'une des revendications 3 ou 4, **caractérisée en ce qu'**un actionneur est relié avec le module d'analyse (9).

6. Commande de machine selon l'une des revendications 1 ou 2, **caractérisée en ce que** le module d'analyse (9) et le module de commande (5) sont disposés de manière intégrée, la première liaison par signaux (8) étant conçu sans fil entre le module de capteur (4) et les modules (9, 5) disposés de manière intégrée.

7. Commande de machine selon l'une des revendications 1 à 6, **caractérisée en ce que**, dans le profil de signal (22), est enregistrée au moins une série de valeurs de variation de valeur du signal discrets dans le temps.

8. Commande de machine selon l'une des revendications 1 à 7, **caractérisée en ce que**, dans le profil de signal (22), est enregistrée au moins une durée du dépassement ou du passage en dessous d'une valeur seuil.

9. Commande de machine selon l'une des revendications 1 à 8, **caractérisée en ce que** le convertisseur est conçu comme un capteur de pression.

10. Commande de machine selon l'une des revendications 1 à 9, **caractérisée en ce que** le convertisseur est conçu comme un capteur de valeur seuil et comprend au moins une valeur seuil.

11. Commande de machine selon l'une des revendications 1 à 10, **caractérisée en ce que** le convertisseur est conçu comme un capteur d'accélération.

12. Commande de machine selon l'une des revendications 1 à 11, **caractérisée en ce que** le convertisseur est conçu comme un composant actif.

13. Procédé de commande d'une machine-outil (1), comprenant une commande de machine selon l'une des revendications 1 à 12, **caractérisé en ce qu'**une action d'une grandeur physique est détectée par le convertisseur du module de capteur (4) et est transmise sous la forme d'une grandeur caractéristique électrique au module d'analyse (9),
qui génère, à partir de celle-ci, par analyse temporelle, un profil de signal (22), une correspondance entre une période et une valeur de signal ou une variation de la valeur du signal étant enregistrée dans le profil de signal (22),
le module d'analyse (9) comparant en outre le profil de signal généré avec le profil de signal enregistré et générant, sur cette base, le signal de commande.

14. Procédé selon la revendication 13, **caractérisé en ce que** le module d'analyse (9) détermine la pente de la variation de la grandeur caractéristique électrique.

15. Procédé selon la revendication 13 ou 14, **caractérisé en ce que** le module d'analyse (9) détermine la durée de dépassement ou de passage en dessous d'une valeur seuil.

16. Procédé selon l'une des revendications 13 à 15, **caractérisé en ce que** le module de capteur comprend un identifiant qui est transmis au module d'analyse ou au module de commande.

17. Procédé selon l'une des revendications 13 à 16, **caractérisé en ce que**, lors du dépassement d'une valeur limite de la variation de valeur du signal, un signal d'alarme est déclenché en tant que signal de commande.
